(19) Europäisches Patentamt
European Patent Office
Office européen des brevets

(11) **EP 4 199 652 A1**

(12) **EUROPEAN PATENT APPLICATION**
published in accordance with Art. 153(4) EPC

(43) Date of publication:
21.06.2023 Bulletin 2023/25

(21) Application number: 21867089.1

(22) Date of filing: 07.09.2021

(51) International Patent Classification (IPC):
*H05B 45/20* (2020.01)    *H05B 45/10* (2020.01)
*H05B 47/16* (2020.01)    *F21V 23/04* (2006.01)
*F21S 10/00* (2006.01)    *F21Y 115/10* (2016.01)

(52) Cooperative Patent Classification (CPC):
Y02B 20/40

(86) International application number:
**PCT/KR2021/012136**

(87) International publication number:
**WO 2022/055223 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 14.09.2020 KR 20200117551

(71) Applicant: **Bae Jin Woo Seoul 06292 (KR)**

(72) Inventor: **Bae Jin Woo Seoul 06292 (KR)**

(74) Representative: **Manitz Finsterwald Patent- und Rechtsanwaltspartnerschaft mbB Martin-Greif-Strasse 1 80336 München (DE)**

(54) **LED LIGHTING SYSTEM**

(57) An LED lighting system capable of performing a dimming function for adjusting brightness of output light to decrease includes: an LED light source comprising three or more LED channels that are respectively configured to emit light of different color temperatures; and an electric circuit configured to electrically drive the three or more LED channels. The electric circuit is configured to drive the three or more LED channels so that brightness and color temperature of the output light obtained by the LED light source decrease together in conjunction with each other during dimming in which the brightness of the output light decreases.

[FIG. 2]

**Description**

[Technical Field]

The present invention relates to an LED lighting system, and more particularly, to an LED lighting system configured to change a correlated color temperature (CCT) of light in conjunction with light dimming.

[Background Art]

Light Emitting Diodes (LEDs) having a long lifespan and excellent energy efficiency are used as light sources for various types of lighting systems, and various attempts are being made to improve lighting quality by improving light characteristics of LEDs. As an example of these attempts, a technology (so-called dim-to-warm technology) that gradually lowers the correlated color temperature along with the decrease in brightness in an LED lighting system having a dimming function that gradually reduces the brightness of output light has been introduced.

For example, US Patent No. 7,288,902 discloses a technology for controlling driving currents of LEDs having different color temperatures to mimic a change in color temperature according to a change in brightness of an incandescent lamp. As another example, U.S. Patent No. 9,769,895 discloses a technology for independently controlling driving currents of white LEDs and red LEDs to be similar to dimming characteristics of incandescent lamps. As another example, Korean Patent Registration No. 10-2136773 discloses a technology for independently controlling driving currents of a cool LED and a warm LED to mimic the correlated color temperature of an incandescent light bulb during dimming. As another example, U.S. Patent No. 8,330,394 discloses a technology for controlling the driving voltage of an LED so that the color of light changes from white to red as the light is dimmed.

These existing technologies suggest a means of dependently changing the correlated color temperature during dimming of the LED lighting system, but only suggesting a method of making the correlated color temperature warm as the brightness decreases to mimic the light characteristics of an incandescent lamp. Therefore, it is required to optimize the LED lighting system while realizing desired light characteristics in consideration of the required correlation between brightness and correlated color temperature during dimming.

<Prior art documents>

- U.S. patent No. US7,288,902 (2007.10.30.)
- U.S. patent No. US9,769,895 (2017.09.19.)
- Korean patent No. KR10-2136773 (2020.07.16.)
- U.S. patent No. US8,330,394 (2012.12.11.)

[Detailed Description of the Invention]

[Technical Problem]

The problem to be solved by the present invention is to provide an LED lighting system having a dim-to-warm function optimized in terms of structure and manufacturing cost according to brightness and correlated color temperature required during dimming using a plurality of LEDs having different correlated color temperatures.

[Technical Solutions]

According to an embodiment of the present invention, an LED lighting system capable of performing a dimming function for adjusting brightness of output light to decrease includes: an LED light source comprising three or more LED channels that are respectively configured to emit light of different color temperatures; and an electric circuit configured to electrically drive the three or more LED channels. The electric circuit is configured to drive the three or more LED channels so that brightness and color temperature of the output light obtained by the LED light source decrease together in conjunction with each other during dimming in which the brightness of the output light decreases.

The electric circuit may operate to generate the output light depending on a dimming level by driving the remaining LED channels except for at least one or more of the three or more LED channels at all the dimming levels according to the dimming function.

The electric circuit may be configured to drive the three or more LED channels by the LED channels into dimming control sections of one smaller number than the number of the three or more LED channels, and the electric circuit may be configured to implement brightness and color temperature of the output light depending on the dimming level by selectively using one of combinations of two LED channels selected from the three or more LED channels in each dimming control section.

The combination of the two LED channels may be composed of two LED channels having adjacent color temperatures among the three or more LED channels.

The electric circuit may be configured to drive one or more of the two LED channels of the selected LED combination at each dimming level to realize the brightness and the color temperature of the output light depending on the dimming level.

The light generated by the combination of the two LED channels is configured to respectively generate light that may be positioned within a 10-2tep MacAdam ellipse at a coordinate on blackbody locus on a chromaticity diagram.

Each LED channel may emit light located within a 10-step MacAdam ellipse at a coordinate on a blackbody locus on the chromaticity diagram.

An LED channel that emits light having the highest color temperature among the three or more LED channels may have a light spectrum in which a maximum value of a relative emission intensity is 60 % or more in a 380 to 500 nm band, and an LED channels that emits light having the lowest color temperature among the three of more LED channels may have a light spectrum in which a maximum value of a relative emission intensity is 30 % for less in the 380 to 500 nm band.

The LED lighting system according to another embodiment may further include a control interface that is configured to receive a desired dimming level from a user and to output a dimming signal corresponding to the input dimming level to the electric circuit.

The electric circuit may be configured to implement a timer function, and wherein when the timer function is activated, the electric circuit may be configured to control the LED channel having the lowest color temperature such that emitted light is automatically dimmed for a predetermined time and then turned off, or to control the LED channel having the lowest color temperature and the LED channel having the next lowest color temperature such that mixed light is automatically dimmed as the color temperature decreases for a predetermined time and then turned off.

The ratio of the maximum brightness of the k-th LED channel in the order of color temperature from high to low among the three or more LED channels to the maximum brightness of the LED channel emitting light of the highest color temperature among the three or more LED channel may be less than a value calculated from $(N-k+1)^2/(4*(N-1))$ (where $1<k<=N$).

The three or more LED channels may include a first LED channel having at least one first LED emitting light having a first color temperature, a second LED channel having at least one second LED having a second color temperature lower than the first color temperature, and a third LED channel having at least one third LED having a third color temperature lower than the second color temperature, and wherein the electric circuit may control to implement a desired brightness and a desired color temperature selectively using one of combinations of two LED channels among the first to third LED channels according to the brightness of the mixed light corresponding to the dimming level.

The first and second LED channels may emit white light and the third LED channel may emit amber-based or red-based light.

The first color temperature may 10,000 K to 4,000 K, the second color temperature may be 3,500 K to 2,500 K and the third color temperature may be 2,500 K to 1,000 K.

The first to third LED channels may emit light located within a 10-step MacAdam ellipse at a coordinate on a blackbody locus on a chromaticity diagram.


[Effects of the Invention]

According to the present invention, since three or more LED channels each emitting light having different color temperatures are provided, and mixed light is generated using two LED channels having color temperatures adjacent to each other in each section during dimming, it is possible to generate mixed light over a wide range of color temperatures and at the same time it is possible to express colors that can similarly follow the trajectory of a black body on a chromaticity diagram.

Furthermore, when the brightness gets darker as the dimming level increases, the brightness and color temperature are linked and reduced together, so that the maximum brightness of the LED channel emitting warm light with a low color temperature can decrease, thereby reducing the number of LEDs of an LED channel emitting light having low color temperature.


[Brief Description of Drawings]

FIG. 1 is a block diagram of an LED lighting system according to an embodiment of the present invention.

FIG. 2 shows a chromaticity diagram showing schematic coordinates of light of three LED channels having different color temperatures of an LED lighting system according to an embodiment of the present invention.

FIG. 3 shows a chromaticity diagram showing trajectories of mixed lights that can be formed by combining two lights having a relatively high color temperature among the three lights shown in the chromaticity diagram of FIG. 2.

FIG. 4 shows a chromaticity diagram showing trajectories of mixed lights that can be formed by combining two lights having a relatively low color temperature among the three lights shown in the chromaticity diagram of FIG. 2.

FIG. 5 shows an example of a graph showing target brightness and target color temperature according to dimming levels using three lights indicated in the chromaticity diagram of FIG. 2.

FIG. 6 shows an example of a graph showing brightness of three lights according to dimming levels for realizing the target brightness and target color temperature shown in FIG. 5.

FIG. 7 shows a chromaticity diagram showing schematic coordinates of lights of three LED channels having different color temperatures of an LED lighting system according to another embodiment of the present invention.

FIG. 8 shows a chromaticity diagram showing trajectories of mixed lights that can be formed by combining two lights having a relatively high color temperature among the three lights shown in the chromaticity diagram of FIG. 7.

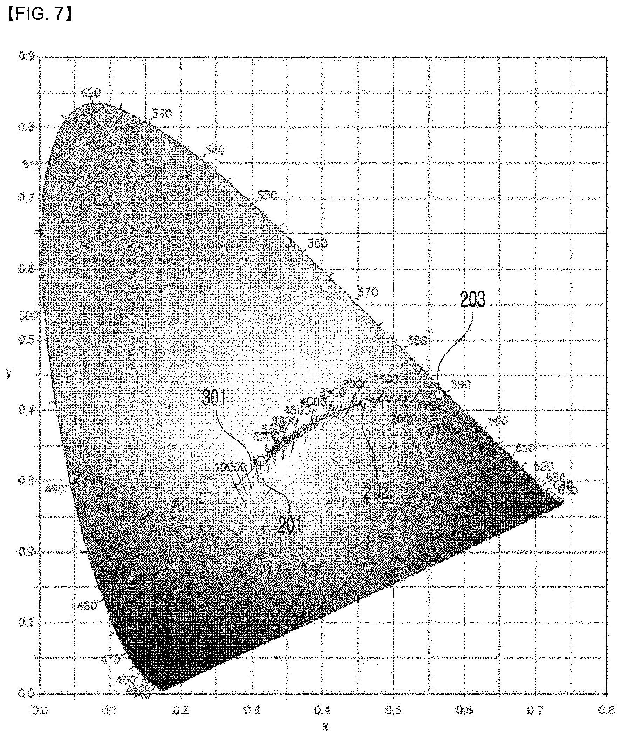

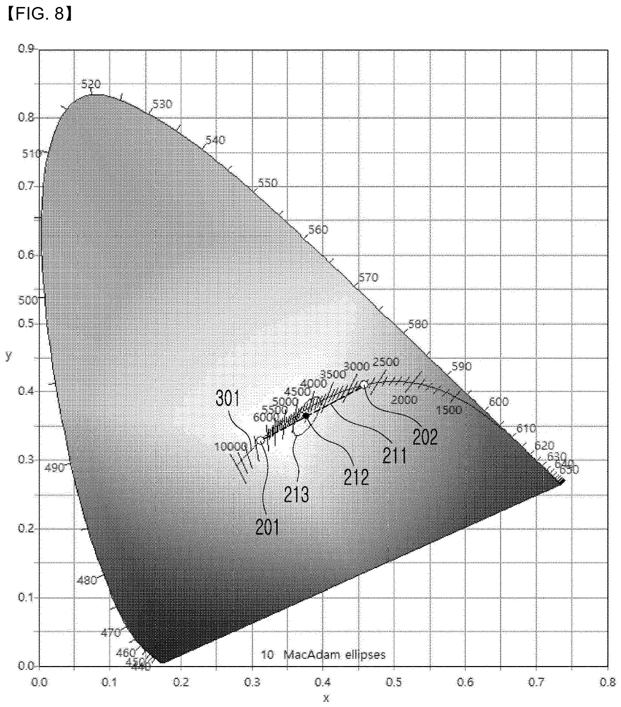

FIG. 8 shows a chromaticity diagram showing trajectories of mixed lights that can be formed by combining two lights having a relatively low color temperature among the three lights shown in the chromaticity diagram of FIG. 7.

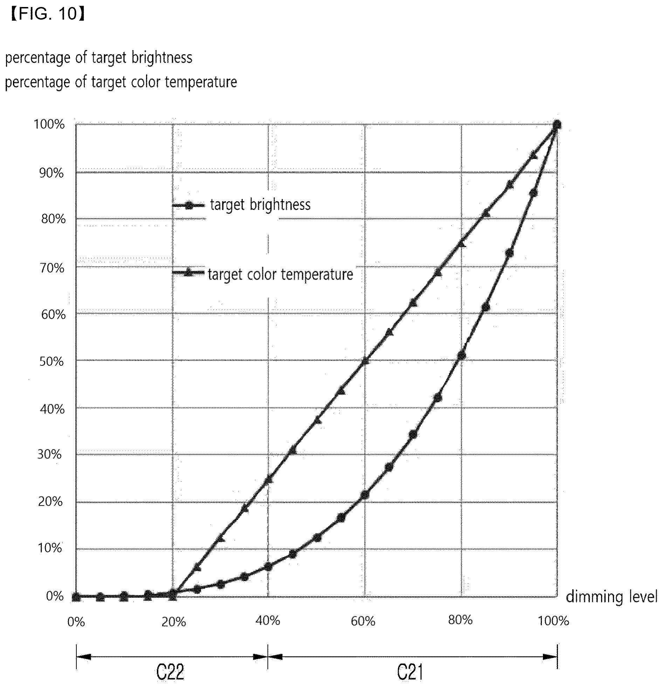

FIG. 10 shows an example of a graph showing target brightness and target color temperature according to dimming levels using three lights indicated in the chromaticity diagram of FIG. 7.

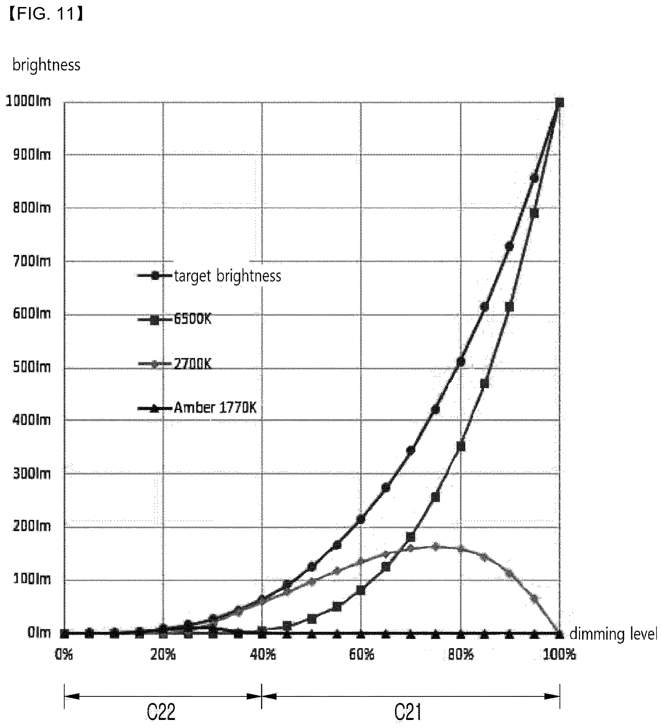

FIG. 11 shows an example of a graph showing brightness of three lights according to dimming levels for realizing the target brightness and target color temperature shown in FIG. 10.

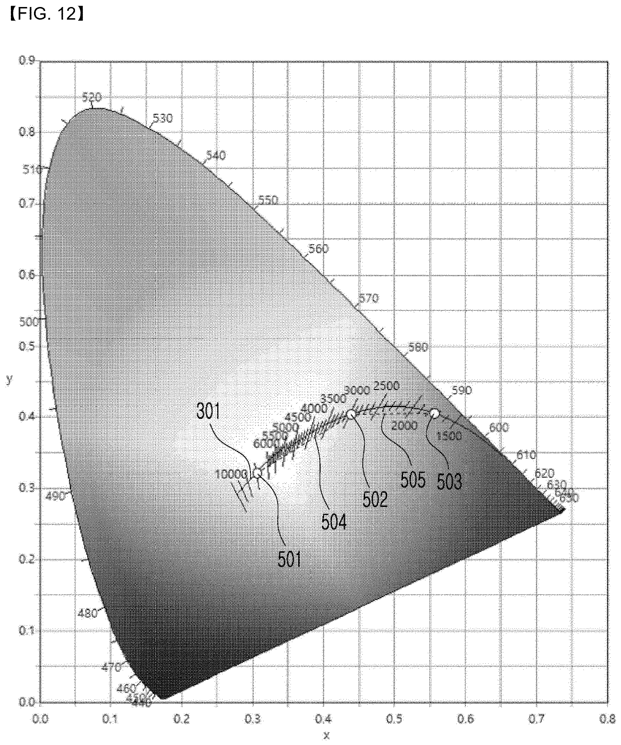

FIG. 12 is a chromaticity diagram showing exemplary coordinates of lights of three LED channels having different color temperatures according to an embodiment of the present invention.

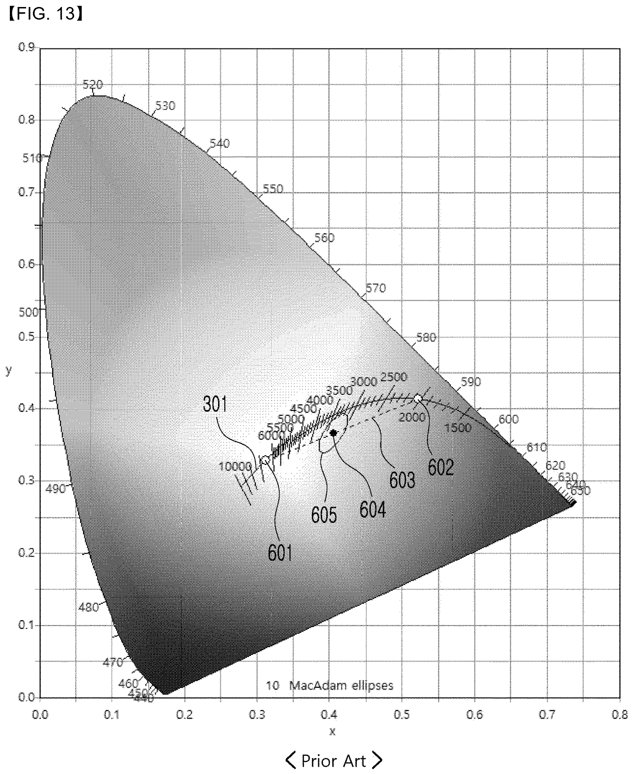

FIG. 13 shows a chromaticity diagram in which coordinates of two lights having different color temperatures are displayed according to the prior art.

[Embodiments of the Invention]

Hereinafter, embodiments of the present invention will be described in detail with reference to the accompanying drawings.

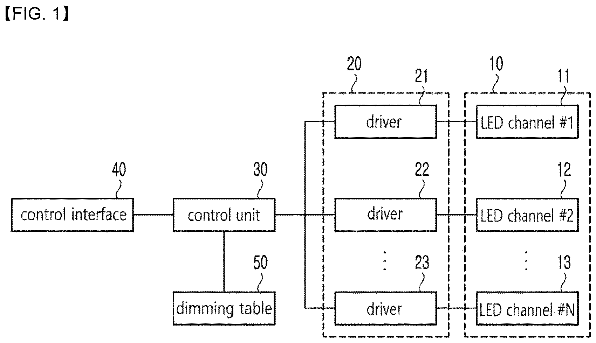

FIG. 1 shows a block diagram of an LED lighting system according to one embodiment of the present invention. Referring to FIG. 1, an LED light source 10 includes three or more, for example, N (a natural number greater than or equal to 3) LED channels 11, 12 and 13. Each of the LED channels 11, 12 and 13 includes one or more LEDs, and is configured to be able to emit lights having different color temperatures from a relatively highest color temperature to a lowest color temperature. Herein, the color temperature means a correlated color temperature (CCT) and is simply referred to as a color temperature hereinafter.

An LED lighting system according to an embodiment of the present invention may be implemented as any type of a lighting device such as a desk lamp, a lamp installed on a ceiling or a wall, and the like.

The LED channel #1 11 emits light having the highest color temperature among the N LED channels, and the remaining LED channels emit light having gradually lower color temperatures as the number of channels increases. Accordingly, the LED channel #N 13 emits light having a relatively lowest color temperature. Hereinafter, two embodiments including three LED channels will be described, but the number of LED channels is not limited thereto, and four or more LED channels may be provided. Each of the LED channels 11, 12 and 13 may include one or more LEDs emitting light of a corresponding color temperature, for example, and may include LEDs as a light source emitting light having various color temperatures such as a white LED, a red LED, an amber LED and the like.

A driver 20 is configured to electrically drive each LED channels 11, 12 and 13. For example, the driver 20 may be an electric circuit capable of selectively driving each of the LED channels 11, 12 and 13 by applying a driving current to each of the LED channels 11, 12 and 13. For example, the driver 20 may be a current driver capable of supplying a desired amount of current, a constant voltage driver capable of applying a constant voltage, and an electric circuit capable of driving the LEDs of the LED channel in an arbitrary manner. As shown in FIG. 1, the driver 20 includes three or more drivers 21, 22 and 23 provided for each LED channel 11, 12 and 13 to drive each LED channel 11, 12 and 13, respectively.

A control unit 30 is configured to control the driver 20 so that the brightness of light emitted from each of the LED channels 11, 12 and 13 is adjusted depending on an input dimming signal. The dimming signal may be input to the control unit 30 through a control interface 40. The control unit 30 may include a microprocessor, a memory, and related hardware and software, and may be programmed to control the driver 20 according to a control logic to be described below.

A control interface 40 is configured to receive a desired dimming level input from a user. When a user inputs a desired dimming level using the control interface 40, the control interface 40 generates a dimming signal corresponding to the input dimming level and outputs the dimming signal to the control unit 30, and the control unit 30 may outputs a control signal to drive the driver 20 in accordance with the transmitted dimming signal. At this time, the control unit 30 may obtain a driving current for driving each LED channel 11, 12 and 13 from a dimming table 50 to implement the input dimming level. The dimming table 50 may be a lookup table including data on the driving current of each LED channel 11, 12 and 13 for implementing a dimming level (i.e., a brightness level of light) corresponding to each dimming signal. As another example, the control unit 30 may calculate a driving current corresponding to an input dimming level using a predetermined function.

The control interface 40 may be integrally formed with elements constituting a main body of the lighting system, such as the control unit 30, the driver 20 and the LED light source 30, or may be separately configured remotely and may be connected thereto by a wired manner or a wireless manner. In addition, the control interface 40 may be implemented with any interface configured to allow a user to input a desired dimming level, such as a rotary or sliding knob or a touch screen type input means.

The control unit 30 controls the brightness and color temperature of the mixed light emitted from the LED light source 10 to decrease together with an increase in the dimming level indicated by the dimming signal. Here, an increase in the dimming level means that the brightness of the light gradually becomes darker. For example, the dimming level may include a total of 21 levels, from level 1 to level 21, and the dimming level of level 1 may represent a state of maximum brightness and the level of dimming of level 21 may represent a state of zero brightness. In this process, the brightness may be set to gradually decrease as the dimming level increases from level 1 to level 21. In an exemplary embodiment of the present invention, the brightness decreases as the dimming level increases, and the color temperature also decreases in association with the brightness. As a result, as the brightness decreases due to dimming, the color temperature is also decreased in conjunction with each other, so that a warm light having a low color temperature can be created according to the progress of dimming, thereby implementing a dim-to-warm function. At a low dimming level, a bright mixed light with a high color temperature is created for use in work and study, and at a high dimming level, a dark mixed light with a low color temperature is created for use in rest and sleep.

Furthermore, according to an embodiment of the present invention, the control unit 30 is configured to control the driver 20 according to consecutive N-1 control sections set according to the increase of the dimming level. At least one of two LED channels having adjacent color temperatures is used to obtain mixed light in each control section. For example, when N LED channels from No. 1 to No. N arranged in increasing order of color temperature are used, in the control section with the lowest dimming level, at least one of No. 1 and No. 2 LED channels is used to create mixed light, and in a control section of the next dimming level, the mixed light is generated using at least one of the second and third LED channels. In this way, dimming is performed by sequentially using two LED channels with color temperatures adjacent to each other in each control section and in the last control section the mixed light is created by using at least one of the N LED channel and the preceding LED channel. Since mixed light is generated using two LED channels having adjacent color temperatures in each control section in this manner, light characteristics approximate to a desired trajectory on a chromaticity diagram during dimming can be implemented. This will be explained again later.

Each of the LED channels 11, 12 and 13 may emit light located within a 10-step MacAdam ellipse at coordinates on a black body locus on the chromaticity diagram.

The LED channel 11 emitting light having the highest color temperature among the N LED channels may emit light having a light spectrum having a maximum value of 60% or more of relative emission intensity in a band of 380 to 500 nm, and the LED channel 13 emitting light having the lowest color temperature among the N LED channels may emit light having a light spectrum having a maximum value of 30% or less of relative emission intensity in a band of 380 to 500 nm. The light having a high color temperature, which occupies a large portion of the mixed light at a low dimming level having a high brightness, includes more the spectrum around 460 nm that suppresses melatonin secretion and the light having a low color temperature, which occupies a large portion of the mixed light at a high dimming level having a low brightness, includes less the spectrum around 460 nm, so that melatonin secretion can be suppressed in a high brightness state to increase concentration and melatonin secretion and sleep can be helped in a low brightness state.

Meanwhile, according to an embodiment of the present invention, the control unit 30 may be configured to implement a timer function. When the timer function is activated, dimming may be performed by driving an LED channel having the lowest color temperature among the N LED channels, and particularly a light having the lowest color temperature is automatically dimmed for a predetermined time period and is then turned off. Meanwhile, in another example, when the timer function is activated, an LED channel emitting light of the lowest color temperature among N LED channels (i.e., Nth LED channel) and an LED channel emitting light of the next lowest color temperature (i.e., N-1th LED channel) may be driven together to gradually dim as the color temperature decreases and are then turn off.

On the other hand, the LED lighting system according to another embodiment of the present invention may have a wireless charging function for wireless charging of mobile phones and the like. When the LED lighting system according to an embodiment of the present invention is implemented in the form of a desk lamp, a mobile phone holder pad for wireless charging may be provided, and the mobile phone can be wirelessly charged by being placed on the pad. A detailed description of an electric circuit for implementing the wireless charging function will be omitted.

In a system composed of N LED channels, if the color temperature decreases linearly as the dimming level increases and the change in brightness decreases with an m-order polynomial, the k th LED channel and the k-1 th LED channel are mixed. The mixing ratio $y_k$ of the k th LED channel to the k-1 th LED channel in the section where the k th LED channel and the k-1 th LED channel are mixed is expressed by Equation 1 below.

[Equation 1]

$$y_k = -(N-1)x + (N-k+1)$$

where x is a normalized value of the dimming level and is a value between 0 and 1, where '1' corresponds to the lowest dimming level in the brightest brightness state and '0' corresponds to the highest dimming level in the turned-off state.

A brightness ratio $L_k$ of the maximum brightness of the first channel having the highest temperature color to the brightness of the k th channel is expressed by Equation 2 below.

[Equation 2]

$$L_k = y_k * L_{total}$$

where $L_{total}$ is a value between 0 and 1, which is a normalized value of the total system brightness with respect to the maximum system brightness depending on the dimming level, and '1' indicates a state that the total brightness of the system is equal to the system maximum brightness and '0' indicates the off state where the total brightness is 0.

At this time, since the total system brightness $L_{total}$ is $x^m$, the brightness ratio $L_k$ of the brightness of the k-th channel to the maximum brightness of the first channel is expressed by Equation 3 below.

【Equation 3】

$$L_k = [-(N-1)x + (N-k+1)] * x^m = -(N-1) * x^{(m+1)} + (N-k+1) * x^m$$

The point at which the brightness of the k-th LED channel is maximized in the above section is the point at which the differential value of $L_k$ becomes 0. When Equation 3 is differentiated, the following Equation 4 is obtained.

[Equation 4]

$$L_k' = -(m+1)(N-1)x^m + m(N-k+1)x^{(m-1)}$$

The point $x_{max}$ at which the brightness of the k-th LED channel is maximized by substituting 0 for $L_k'$ in Equation 4 is expressed by Equation 5 below.

[Equation 5]

$$x_{max} = m * (N-k+1)/[(m+1)(N-1)]$$

Therefore, if $x_{max}$ in Equation 5 is substituted for the x value in Equation 3, the maximum brightness $L_{k\_max}$ of the k-th LED channel is expressed by Equation 6 below.

[Equation 6]

$$L_{k\_max} = [-m(N-k+1)/(m+1) + m(N-k+1)] * [m(N-k+1)/[(m+1)(N-1)]]^m$$

For example, in a system composed of a total of 3 LED channels (N=3), the maximum brightness $L_{2\_max}$ depending on the change of the dimming level of the second channel (k=2) decreases as the polynomial order m increases, for example it becomes 0.500 when m is 1, 0.296 when m is 2, 0.211 when m is 3, 0.164 when m is 4, 0.134 when m is 5. That is, as the brightness change of the system depending on the dimming level becomes non-linear, the required maximum brightness of the second or higher channels decreases. Since the human eye reacts to changes in brightness logarithmically, the change in brightness of the lighting system must increase exponentially, which is opposite to the change in brightness, so that the human eye feels that the brightness increases linearly. Therefore, it is desirable that the brightness change of the lighting system increases nonlinearly.

Therefore, it is preferable that the maximum brightness of the k-th LED channel is smaller than that of the first-order polynomial of m = 1. If m = 1 is substituted into Equation 6, the maximum brightness $L_{k\_max}$ of the k-th LED channel is obtained by Equation 7 below.

[Equation 7]

$$L_{k\_max}=(N-k+1)^{2}/(4^{*}(N-1))$$

where 1 <k<=N.

Therefore, according to an embodiment of the present invention, the ratio of the maximum brightness of the k th LED channel to the maximum brightness of the LED channel emitting light of the highest color temperature among the N LED channels may be set smaller than the value calculated by $(N-k+1)^2/(4^*(N-1))$ (where 1<k<=N).

An LED lighting system according to an embodiment of the present invention includes three LED channels respectively emitting light of three different color temperatures. In this case, the highest color temperature among the three color temperatures may be a value between 10,000 K and 4,000 K, the middle color temperature may be a value between 3,500 K and 2,500 K, and the lowest color temperature may be a value between 2,500 K and 1,000 K. In addition, the three lights having different color temperature may be lights positioned within a 10-step MacAdam ellipse at coordinates from a blackbody locus on the chromaticity diagram. Three LED channels each having these three color temperatures are used, and in the section corresponding to the low dimming level where the brightness is relatively high, the light is made by mixing the light with the highest color temperature belonging to between 10,000 K and 4,000 K and the light with the next highest color temperature belonging to between 3,500 K and 2,500 K, and in the section corresponding to the high dimming level, in which the light is relatively dark, the light is made by mixing the light with a color temperature belonging to 3,500 K to 2,500 K and the light having the lowest color temperature belonging to 2,500 K to 1,000 K. Since dimming is performed by sequentially using LED channels having consecutive color temperatures among the three LED channels having different color temperatures, it is possible to express colors similarly following a blackbody locus on a chromaticity diagram.

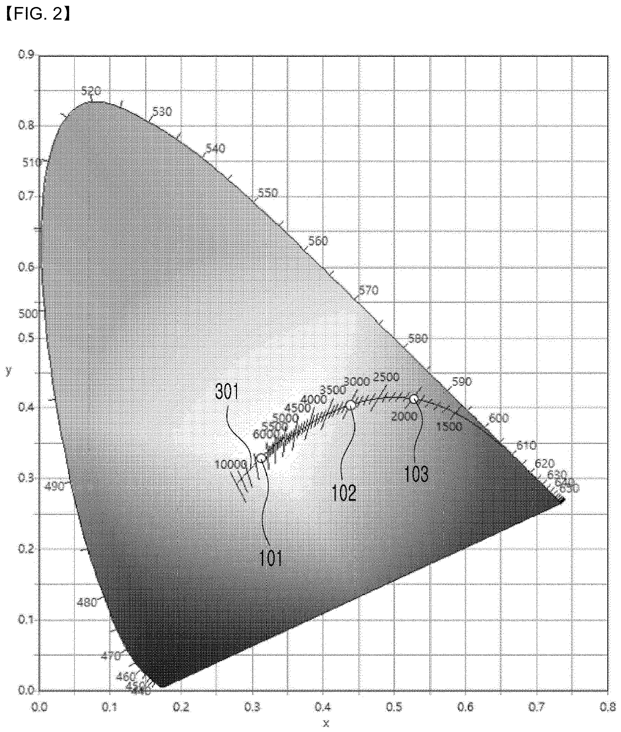

More specifically, a general lighting product using a conventional tunable white LED is configured to independently change brightness and color temperature in the range of 6,500 K to 2,700 K, and in this case color expression is made along a straight line connecting coordinate points corresponding to 6,500 K and 2,700 K on the blackbody locus of the chromaticity diagram shown in FIG. 2, and since the straight line does not deviate greatly from the blackbody locus, color expression can be allowed to similarly follow the blackbody locus. However, if the range is expanded to 2,500 K or less to further widen the color temperature expression range, since the black body locus is greatly bent near 2,500 K as shown in FIG. 2, color expression similarly following the black body locus is not possible. For example, as shown in FIG. 13, if light corresponding to coordinates 601 of approximately 6,500 K and light corresponding to coordinates 602 of approximately 2,050 K on a blackbody locus 301 on a chromaticity diagram are mixed in a conventionally known way, mixed light having coordinates on a straight line 603 connecting two coordinates 601 and 602 is obtained. At this time, a significant portion of the coordinates of the straight line 603 deviate greatly from the blackbody locus, and the 10-step MacAdam ellipse of some coordinates 604 deviate from the blackbody locus, so that color expression similarly following the blackbody locus is not possible. As another example of the prior art, a dimming technology that expresses color along a desired trajectory on a chromaticity diagram, for example, a blackbody locus, by mixing three lights of different colors, for example, green light, blue light, and red light, and in this technology, it is possible to express colors within the entire area of the triangle connecting the coordinates on the chromaticity diagram of the three lights, so that it is possible to express colors precisely along the blackbody trajectory if necessary, but the brightness and color temperature depending on dimming are not controlled in an interlocked way, so that there is a problem in that control is complicated and the manufacturing cost of the lighting system greatly increases. The present invention solves these problems and provides a method for enabling color expression similarly following a blackbody locus while enabling a wide range of color temperature expression, and an LED lighting system according to an embodiment of the present invention uses three or more LED channels having different color temperatures and uses two LED channels having adjacent color temperatures for each section, thereby making it possible to express colors in a wide color temperature range while similarly following a blackbody locus. For example, in an embodiment of the present invention, as shown in FIG. 12, light corresponding to coordinate 501 of approximately 6,500 K on a blackbody locus 301 on a chromaticity diagram, light corresponding to coordinate 502 of approximately 3,000 K, and light corresponding to the coordinate 503 of approximately 1,750 K are used. In the dimming section where the brightness is relatively bright, two lights corresponding to the coordinates 501 and 502 having relatively high color temperatures are mixed. In the low dimming section where the brightness is relatively dark, two lights corresponding to the coordinates 502 and 503 having relatively lower color temperature are mixed. Accordingly, color expression on two straight lines 504 and 505 similarly following the black body locus 301 over a wide color temperature range is possible. In the chromaticity diagram shown in FIG. 2 and the like, the background part indicating the color temperature is displayed in black and white, but it can be understood that it has the same distribution as the color temperature of the commonly used chromaticity diagram.

Hereinafter, embodiments including three LED channels respectively emitting light of three different color temperatures will be described. As specific examples, two embodiments using three LED channels respectively generating light of different color temperatures, that is, an embodiment using three white LED channels respectively generating white light having different color temperatures, and an embodiment using two white LED channels respectively generating white light having different color temperatures and one amber LED channel generating amber light will be described. Table 1 and FIGs. 2 to 6 are for explaining an embodiment using three white LED channels, and Table 2 and FIGs. 7 to 11 are for explaining an embodiment using two white LED channels and one amber LED channel. These two examples are illustrative for explaining the embodiment of the present invention, and the number of LED channels, the color temperature of generated light, and the like may be variously changed.

**Example 1: white of 6,500 K - white of 3,000 K - white of 2,000 K**

An LED channel generating white light with a color temperature of 6,500 K (Kelvin), an LED channel generating white light with a color temperature of 3,000 K, and an LED channel generating white light with a color temperature of 2,000 K are used. Each LED channel may include one or more LEDs generating white light of a corresponding color temperature.

In FIG. 2, the coordinates (x-y scale) 101 of 6,500 K white light, the coordinates 102 of 3,000 K white light, and the coordinates 103 of 2,000 K white light generated in each of the three LED channels are shown in chromaticity diagram displayed on a color chart of CIE (International Commission on Illumination), and a black body locus 301 is additionally shown. As shown in the figure, the three white lights used are white lights having coordinates on the black body locus 301.

When there are three LED channels emitting light of different color temperatures, that is, when N=3, a dimming control is performed in N-1, that is, two control sections. In a relatively bright control section with a low dimming level, mixed light is generated using two LED channels that generate two adjacent lights of high color temperature, that is, 6,500 K white light and 3,000 K white light, and in a relatively dark control section with an increase of the dimming level, mixed light is generated using two LED channels generating two adjacent lights having low color temperatures, that is, 3,000 K white light and 2,000 K white light.

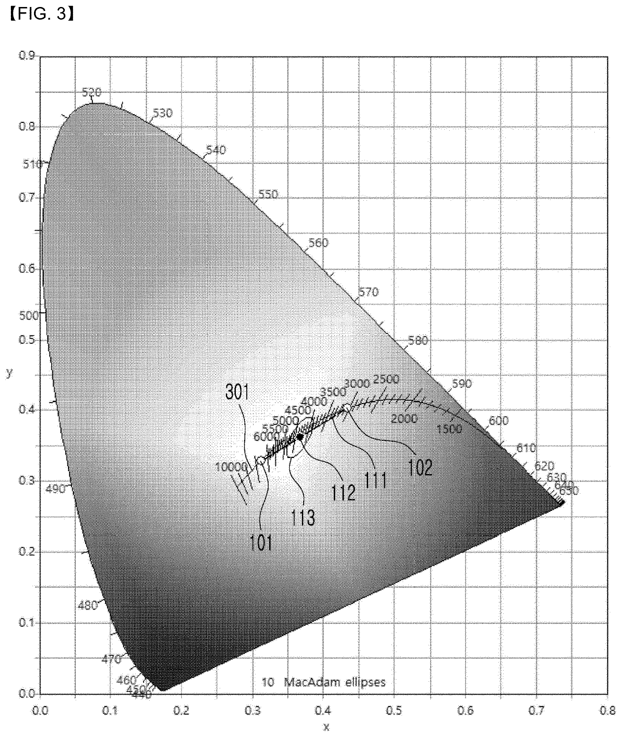

FIG. 3 shows a coordinate trajectory 111 of light that can be obtained by mixing 6,500 K white light and 3,000 K white light in a first control section having a relatively high brightness, and one coordinate 112 of the trajectory 111 is shown as an example. At this time, the trajectory 111 of coordinates of light that can be obtained by mixing 6,500 K white light and 3,000 K white light coincides with a straight line connecting the coordinate 101 of 6,500 K white light and the coordinate 102 of 3,000 K white light. An ellipse indicated by reference numeral 113 in FIG. 3 represents a 10-step MacAdam ellipse of light at coordinates 112 of mixed light. In an embodiment of the present invention, mixed light obtained by mixing light generated from LED channels of adjacent color temperatures is configured to be located within a 10-step MacAdam ellipse at coordinates on a blackbody locus on a chromaticity diagram, and this may be interpreted as equivalent to that a 10-step MacAdam ellipse at arbitrary coordinates on the locus 111 of the mixed light includes at least a portion of the blackbody locus 301.

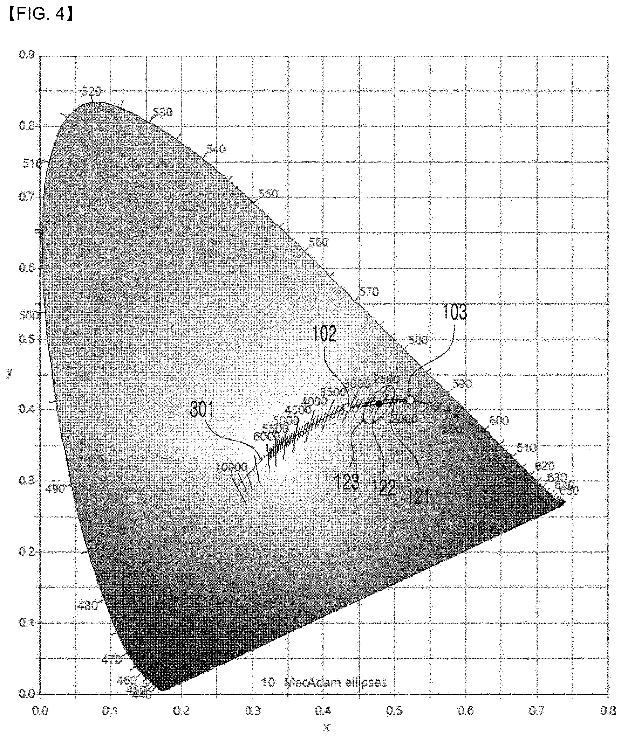

FIG. 4 shows a coordinate trajectory 121 of light that can be obtained by mixing 3,000 K white light and 2,000 K white light in a second control section having a relatively low brightness, and one coordinate 122 of the trajectory 121 is indicated as an example. At this time, the trajectory 121 of coordinates of light that can be obtained by mixing 3,000 K white light and 2,000 K white light coincides with a straight line connecting the coordinate 102 of 3,000 K white light and the coordinate 103 of 2,000 K white light. An ellipse indicated by reference numeral 123 in FIG. 4 represents a 10-step MacAdam ellipse of light at coordinates 122 of mixed light. As in the first control section, in the second control section, the mixed light obtained by mixing the light generated from the LED channels of adjacent color temperatures is located within the 10-step MacAdam ellipse at the coordinates on the blackbody locus on the chromaticity diagram. This may be interpreted as equivalent to that a 10-step MacAdam ellipse at arbitrary coordinates on the coordinate locus 121 of the mixed light in FIG. 4 includes at least a portion of the blackbody locus 301.

Mixed lights that can be obtained by mixing lights of adjacent color temperatures are positioned within the 10-step MacAdam ellipse at coordinates on the blackbody locus, so that mixed lights approximate to the blackbody locus can be maintained during dimming.

Table 1 exemplarily shows target brightness and brightness of each light for realizing a target color temperature depending on dimming levels using 6,500 K white light, 3,000 K white light, and 2,000 K white light. In Table 1, the brightness of each white light is calculated as values capable of achieving a target brightness and a target color temperature and is described as a value rounded to the second decimal place. No of the dimming level is the sequential numbering of each level of the dimming level, and % values are values obtained by sequentially decreasing the dimming level from 100% to 0% by the same magnitude. For example, the target brightness is the sum of the brightness of each light, the target color temperature can be roughly calculated as a weighted average value depending on the brightness of the color temperature of each light, and the brightness of each light can be determined by values satisfying these conditions.

[Table 1]

| Dimming level | | Target brightness | Target color temperature | white 6,500K | white 3,000K | white 2,000K |
|---|---|---|---|---|---|---|
| No. | % | lm | K | lm | lm | lm |
| 1 | 100% | 1000.0lm | 6,500K | 1000.0lm | 0.0lm | 0.0lm |
| 2 | 95% | 857.4lm | 6.275K | 802.3lm | 55.1lm | 0.0lm |
| 3 | 90% | 729.0lm | 6,050K | 635.3lm | 93.7lm | 0.0lm |
| 4 | 85% | 614.1lm | 5,825K | 495.7lm | 118.4lm | 0.0lm |
| 5 | 80% | 512.0lm | 5.600K | 380.3lm | 131.7lm | 0.0lm |
| 6 | 75% | 421.9lm | 5.375K | 286.3lm | 135.6lm | 0.0lm |
| 7 | 70% | 343.0lm | 5,150K | 210.7lm | 132.3lm | 0.0lm |
| 8 | 65% | 274.6lm | 4,925K | 151.0lm | 123.6lm | 0.0lm |
| 9 | 60% | 216.0lm | 4,700K | 104.9lm | 111.1lm | 0.0lm |
| 10 | 55% | 166.4lm | 4,475K | 70.1lm | 96.3lm | 0.0lm |
| 11 | 50% | 125.0lm | 4,250K | 44.6lm | 80.4lm | 0.0lm |
| 12 | 45% | 91.1lm | 4,025K | 26.7lm | 64.4lm | 0.0lm |
| 13 | 40% | 64.0lm | 3,800K | 14.6lm | 49.4lm | 0.0lm |
| 14 | 35% | 42.9lm | 3.575K | 7.0lm | 35.8lm | 0.0lm |
| 15 | 30% | 27.0lm | 3,350K | 2.7lm | 24.3lm | 0.0lm |
| 16 | 25% | 15.6lm | 3,125K | 0.6lm | 15.1lm | 0.0lm |
| 17 | 20% | 8.0lm | 2,900K | 0.0lm | 7.2lm | 0.8lm |
| 18 | 15% | 3.4lm | 2,675K | 0.0lm | 2.3lm | 1.1lm |
| 19 | 10% | 1.0lm | 2,450K | 0.0lm | 0.5lm | 0.5lm |
| 20 | 5% | 0.1lm | 2,225K | 0.0lm | 0.0lm | 0.1lm |
| 21 | 0% | 0.0lm | 2,000K | 0.0lm | 0.0lm | 0.0lm |

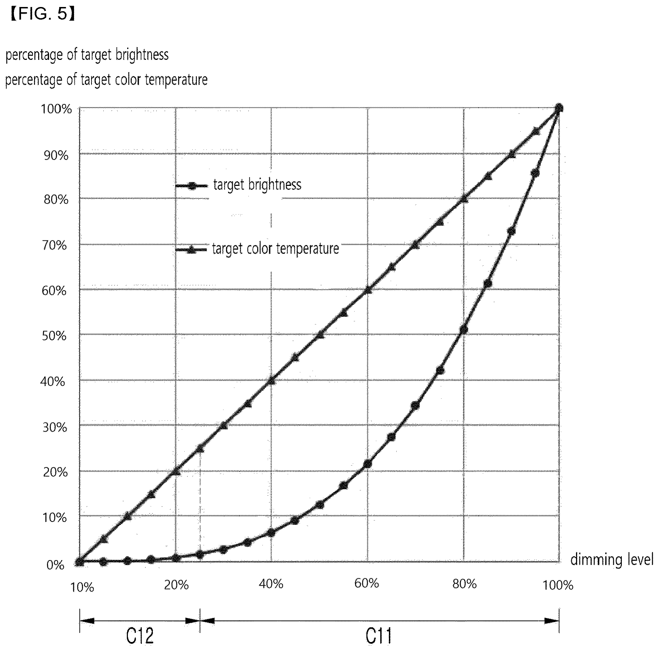

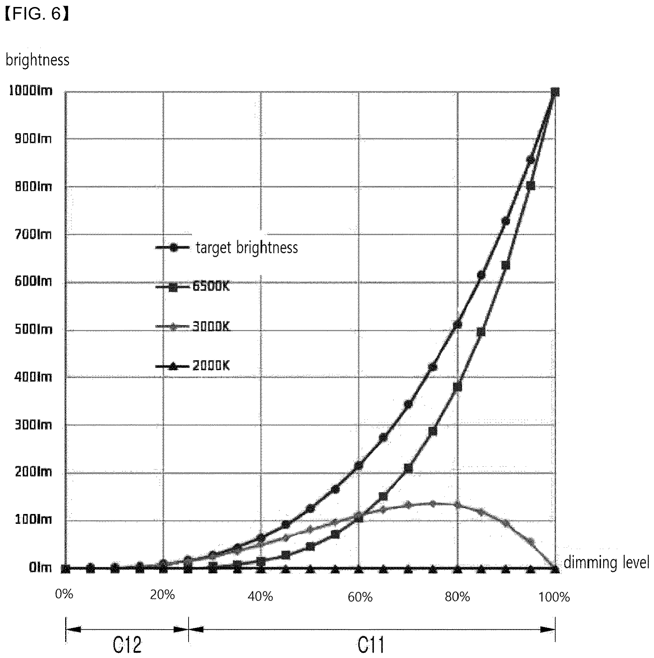

Meanwhile, FIG. 5 is a graph showing the target brightness and target color temperature percentage for each dimming level of Table 1, and FIG. 6 is a graph showing the brightness of each light for each dimming level of Table 1. In Table 1, the target brightness is set to the maximum brightness in the lowest dimming level, i.e., the dimming level No. 1 and is set to be turned off in the highest dimming level, i.e., the dimming level No. 21. In FIG. 5, the target brightness is represented as a percentage of the brightness of the corresponding dimming level to the maximum brightness. In Table 1, the target color temperature is set to 6,500 K, which is the highest color temperature among the three lights used in the dimming level No. 1, and is set to 2,000 K, which is the lowest color temperature, in the dimming level No. 21. In FIG. 6, the target brightness is shown as a percentage of the target color temperature of each dimming level when the color temperature of 6,500 K is 100% and the color temperature of 2,000 K is 0%. Referring to Table 1 and FIGs. 5 and 6, when the dim-to-worm function is implemented using three (N=3) different LED channels, the dimming control is performed in divided two (N-1) control sections C11 and C12. In FIGs. 5 and 6, the horizontal axis represents the percentage of the dimming level, and 100% at the far right corresponds to the lowest dimming level of the maximum brightness and 0% corresponds to the highest dimming level of the turned off state. That is, as the dimming level increases, a path moving from the right side to the left side of the horizontal axis in FIGs. 5 and 6 is followed.

First, in the first control section C11, mixed light is generated by mixing 6,500 K light having the highest color temperature and 3,000 K light having the next highest color temperature. The first control section C11 is a section from 100% to 25% of the dimming level. In the first control section C11, as the dimming level increases, the brightness of the 6,500 K white light having a relatively high color temperature is gradually decreased, and the brightness of the 3,000 K white light having a relatively low color temperature is gradually increased and then decreased again.

Next, in the second control section C12, mixed light is generated by mixing 3,000 K light having an intermediate color temperature and 2,000 K light having the lowest color temperature. The second control section C12 is a section from 20% to 0% of the dimming level. In this control section C12, as the dimming level increases, the brightness of 3,000 K white light having a relatively high color temperature gradually decreases, and the brightness of 2,000 K light having a relatively low color temperature increases and then decreases. As such, when the dimming level increases in each of the control sections C11 and C12, the brightness of the LED channel having the higher color temperature among the two adjacent LED channels is gradually decreased and the brightness of the LED channel having a lower color temperature is gradually increased and then decreased, and thereby the percentage of brightness tends to decrease nonlinearly as the dimming level increases, as shown in FIG. 5. If the percentage of brightness changes nonlinearly depending on the linear change of the dimming level as shown in FIG. 5, the user perceives that the brightness changes linearly according to the linear change of the dimming level. This is due to the fact that the human eye is insensitive to changes in brightness when it is relatively bright and sensitive to changes in brightness when it is relatively dark. At low dimming levels having a relatively high brightness, the change in brightness increases depending on the change in the dimming level, so that the user perceives that the brightness changes linearly in accordance with the linear change in the dimming level. Accordingly, a high-quality lighting system that can be recognized as a linear change in brightness corresponding to a linear change in dimming level can be provided.

As shown in FIG. 5 by the change in the brightness of each light according to the change in the dimming level in the two control sections C11 and C12, the percentage of the target brightness can be made to change nonlinearly according to the dimming level, and the percentage of the target color temperature can be made to vary linearly according to the dimming level. For example, the percentage of the target brightness may nonlinearly change in the form of a quadratic or higher order polynomial function or an exponential function with respect to the dimming level, and the percentage of the target color temperature may change in the form of a linear function. In particular, by making the percentage of the target brightness non-linearly change according to the dimming level, the change in brightness during the dimming process may be visually recognized as a linear change according to the linear change of the dimming level.

**Example 2: white of 6,500 K - white of 2,700 K - amber of 1,700 K**

An LED channel generating white light with a color temperature of 6,500 K (Kelvin), an LED channel generating white light with a color temperature of 2,700 K, and an LED channel generating amber light with a color temperature of 1,700 K are used. Each LED channel may include one or more LEDs generating white light or amber light of a corresponding color temperature. A description overlapping with that of the above-described example 1 will be omitted. In another embodiment of the present invention, red-based light may be used instead of amber-based light.

FIG. 7 shows a chromaticity diagram showing a coordinate 201 of 6,500 K white light, a coordinate 102 of 2,700 K white light, and a coordinate 203 of 1,700 K white light respectively generated in three LED channels on a CIE color chart, and additionally a blackbody locus 301 is shown. As shown in the drawing, the two white lights used are white lights with coordinates on the blackbody locus 301, and the amber light has a coordinate located within the 10-step MacAdam ellipse at one coordinate on the blackbody locus 301.

As in Example 1, dimming control is performed in the two divided control sections. In a relatively bright control section with a low dimming level, mixed light is generated using two LED channels that generate two adjacent lights of high color temperature, namely 6,500 K white light and 2,700 K white light, and with the increase of the dimming level in the relatively dark control section, mixed light is generated using two LED channels generating two adjacent lights having low color temperatures, that is, white light of 2,700 K and amber light of 1,700 K.

FIG. 8 shows a coordinate trajectory 211 of light that can be obtained by mixing 6,500 K white light and 2,700 K white light in a relatively bright first control section, and one coordinate 212 of the trajectory 211 is exemplarily shown. At this time, the trajectory 211 of coordinates of light that can be obtained by mixing 6,500 K white light and 2,700 K white light coincides with a straight line connecting the coordinate 201 of 6,500 K white light and the coordinate 202 of 2,700 K white light. An ellipse indicated by reference numeral 213 in FIG. 8 represents a 10-step MacAdam ellipse of the light at the coordinates 212 of the mixed light. In an embodiment of the present invention, mixed light obtained by mixing light generated from LED channels of adjacent color temperatures is configured to be located within a 10-step MacAdam ellipse at coordinates on a blackbody locus on a chromaticity diagram, and this may be interpreted as equivalent to that a 10-step MacAdam ellipse at arbitrary coordinates on the coordinate locus 211 of the mixed light in FIG. 8 includes at least a portion of the blackbody locus 301.

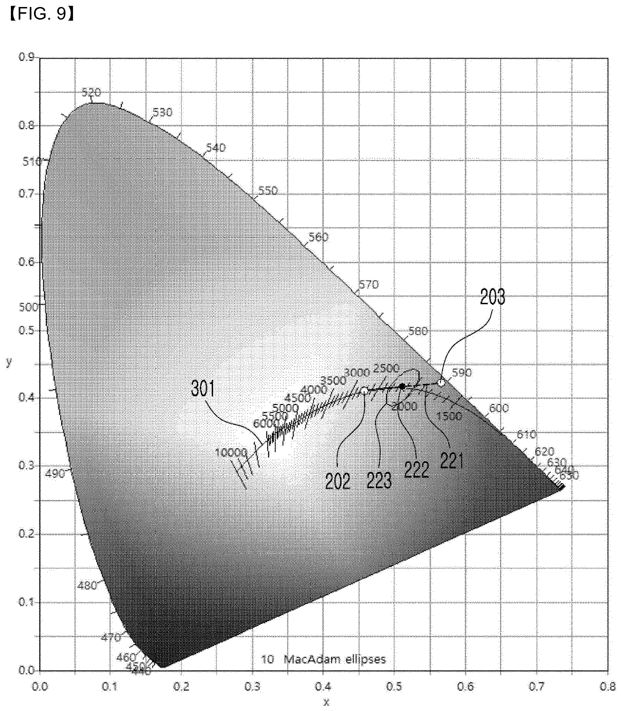

Meanwhile, FIG. 9 shows a coordinate trajectory 221 of light that can be obtained by mixing 2,700 K white light

and 1,700 K amber light in a relatively dark second control section, and one coordinate 222 of the trajectory 221 is shown as an example. At this time, the trajectory 221 of coordinates of light that can be obtained by mixing 2,700 K white light and 1,700 K amber light coincides with a straight line connecting the coordinate 202 of 2,700 K white light and the coordinate 203 of 1,700 K amber light. An ellipse indicated by reference numeral 223 in FIG. 9 represents a 10-step MacAdam ellipse of the light at the coordinate 222 of the mixed light. As in the first control section, in the second control section, the mixed light obtained by mixing the light generated from the LED channels of adjacent color temperatures is located within the 10-step MacAdam ellipse at the coordinate on the blackbody locus on the chromaticity diagram, and this may be interpreted as equivalent to that a 10-step MacAdam ellipse at arbitrary coordinates on the coordinate locus 221 of the mixed light in FIG. 9 includes at least a portion of the blackbody locus 301.

Mixed lights that can be obtained by mixing lights of adjacent color temperatures are positioned within the 10-step MacAdam ellipse at coordinate on the blackbody locus, so that mixed lights approximate to the blackbody locus can be maintained during the dimming process.

Table 2 exemplarily shows target brightness and brightness of each light for realizing a target color temperature according to dimming levels using 6,500 K white light, 2,700 K white light, and 1,700 K amber light. In Table 2, the brightness of each light is calculated as values capable of achieving the target brightness and target color temperature and is described as a value rounded to the second decimal place.

[Table 2]

| Dimming level | | Target brightness | Target color temperature | white 6,500K | white 2,700K | amber 1,770K |
|---|---|---|---|---|---|---|
| No. | % | lm | K | lm | lm | lm |
| 1 | 100% | 1000.0lm | 6,500K | 1000.0lm | 0.0lm | 0.0lm |
| 2 | 95% | 857.4lm | 6.204K | 790.7lm | 66.7lm | 0.0lm |
| 3 | 90% | 729.0lm | 5.909K | 615.6lm | 113.4lm | 0.0lm |
| 4 | 85% | 614.1lm | 5.613K | 470.8lm | 143.3lm | 0.0lm |
| 5 | 80% | 512.0lm | 5.318K | 352.7lm | 159.3lm | 0.0lm |
| 6 | 75% | 421.9lm | 5,022K | 257.8lm | 164.1lm | 0.0lm |
| 7 | 70% | 343.0lm | 4.726K | 182.9lm | 160.1lm | 0.0lm |
| 8 | 65% | 274.6lm | 4,431 K | 125.1lm | 149.6lm | 0.0lm |
| 9 | 60% | 216.0lm | 4,135K | 81.6lm | 134.4lm | 0.0lm |
| 10 | 55% | 166.4lm | 3,839K | 49.9lm | 116.5lm | 0.0lm |
| 11 | 50% | 125.0lm | 3.544K | 27.7lm | 97.3lm | 0.0lm |
| 12 | 45% | 91.1lm | 3.248K | 13.1lm | 78.0lm | 0.0lm |
| 13 | 40% | 64.0lm | 2,953K | 4.2lm | 59.8lm | 0.0lm |
| 14 | 35% | 42.9lm | 2,657K | 0.0lm | 40.9lm | 2.0lm |
| 15 | 30% | 27.0lm | 2,361 K | 0.0lm | 17.2lm | 9.8lm |
| 16 | 25% | 15.6lm | 2,066K | 0.0lm | 5.0lm | 10.7lm |
| 17 | 20% | 8.0lm | 1,770K | 0.0lm | 0.0lm | 8.0lm |
| 18 | 15% | 3.4lm | 1,770K | 0.0lm | 0.0lm | 3.4lm |
| 19 | 10% | 1.0lm | 1,770K | 0.0lm | 0.0lm | 1.0lm |
| 20 | 5% | 0.1lm | 1,770K | 0.0lm | 0.0lm | 0.1lm |
| 21 | 0% | 0.0lm | 1,770K | 0.0lm | 0.0lm | 0.0lm |

Meanwhile, FIG. 10 is a graph showing the percentage of target brightness and target color temperature for each dimming level of Table 2, and FIG. 11 is a graph showing the brightness of each light for each dimming level of Table 2.

Referring to Table 2 and FIGs. 10 and 11, as in the first Example, dimming control is performed in two divided control sections C21 and C22. First, in the first control section C21, mixed light is generated by mixing 6,500 K light having the highest color temperature and 2,700 K light having the next highest color temperature. The first control period C21 is a section from 100% to 40% of the dimming level. In the first control section C21, as the dimming level increases, the brightness of 6,500 K white light having a relatively high color temperature gradually decreases, and the brightness of 2,700 K white light having a relatively low color temperature gradually increases and then decreases again. Next, in the second control section C22, mixed light is generated by mixing light of 2,700 K having an intermediate color temperature and light of 1,700 K having the lowest color temperature. The second control section C22 is a section from the dimming level of 35% to 0%. In this control period C22, as the dimming level increases, the brightness of 2,700 K white light having a relatively high color temperature gradually decreases, and the brightness of 1,700 K amber light having a relatively low color temperature increases and then decreases. By controlling the brightness of each light as described above, the brightness percentage may have a tendency to change non-linearly according to the linear change of the dimming level, so that the user may conceive the brightness to linearly change according to a linear change of the dimming level.

Although preferred embodiments of the present invention have been described in detail above, the scope of the present invention is not limited thereto, and various modifications and improvements by those skilled in the art using the basic concept of the present invention as defined in the following claims are also within the scope of the invention.

(Industrial Applicability)

The present invention relates to an LED lighting system and has industrial applicability since it can be applied to a lighting device.

**Claims**

1.  An LED lighting system capable of performing a dimming function for adjusting brightness of output light to decrease, comprising:

    an LED light source comprising three or more LED channels that are respectively configured to emit light of different color temperatures; and
    an electric circuit configured to electrically drive the three or more LED channels,
    wherein the electric circuit is configured to drive the three or more LED channels so that brightness and color temperature of the output light obtained by the LED light source decrease together in conjunction with each other during dimming in which the brightness of the output light decreases.

2.  The LED lighting system of claim 1, wherein the electric circuit operates to generate the output light depending on a dimming level by driving the remaining LED channels except for at least one or more of the three or more LED channels at all the dimming levels according to the dimming function.

3.  The LED lighting system of claim 1, wherein the electric circuit is configured to drive the three or more LED channels by the LED channels into dimming control sections of one smaller number than the number of the three or more LED channels, and wherein the electric circuit is configured to implement brightness and color temperature of the output light depending on the dimming level by selectively using one of combinations of two LED channels selected from the three or more LED channels in each dimming control section.

4.  The LED lighting system of claim 3, wherein the combination of the two LED channels is composed of two LED channels having adjacent color temperatures among the three or more LED channels.

5.  The LED lighting system of claim 3 or claim 4, wherein the electric circuit is configured to drive one or more of the two LED channels of the selected LED combination at each dimming level to realize the brightness and the color temperature of the output light depending on the dimming level.

6.  The LED lighting system of claim 3 or claim 4, wherein the light generated by the combination of the two LED channels is configured to respectively generate light that is positioned within a 10-2tep MacAdam ellipse at a coordinate on blackbody locus on a chromaticity diagram.

7.  The LED lighting system of claim 6, wherein each LED channel emits light located within a 10-step MacAdam ellipse at a coordinate on a blackbody locus on the chromaticity diagram.

**8.** The LED lighting system of claim 1, wherein an LED channel that emits light having the highest color temperature among the three or more LED channels has a light spectrum in which a maximum value of a relative emission intensity is 60 % or more in a 380 to 500 nm band, and an LED channels that emits light having the lowest color temperature among the three of more LED channels has a light spectrum in which a maximum value of a relative emission intensity is 30 % for less in the 380 to 500 nm band.

**9.** The LED lighting system of claim 1, further comprising a control interface that is configured to receive a desired dimming level from a user and to output a dimming signal corresponding to the input dimming level to the electric circuit.

**10.** The LED lighting system of claim 1, wherein the electric circuit is configured to implement a timer function, and wherein when the timer function is activated, the electric circuit is configured to control the LED channel having the lowest color temperature such that emitted light is automatically dimmed for a predetermined time and then turned off, or to control the LED channel having the lowest color temperature and the LED channel having the next lowest color temperature such that mixed light is automatically dimmed as the color temperature decreases for a predetermined time and then turned off.

**11.** The LED lighting system of claim 1, wherein the ratio of the maximum brightness of the k-th LED channel in the order of color temperature from high to low among the three or more LED channels to the maximum brightness of the LED channel emitting light of the highest color temperature among the three or more LED channel is less than a value calculated from $(N-k+1)^2/(4*(N-1))$ (where $1<k<=N$).

**12.** The LED lighting system of claim 1, wherein the three or more LED channels comprises a first LED channel having at least one first LED emitting light having a first color temperature, a second LED channel having at least one second LED having a second color temperature lower than the first color temperature, and a third LED channel having at least one third LED having a third color temperature lower than the second color temperature, and wherein the electric circuit controls to implement a desired brightness and a desired color temperature selectively using one of combinations of two LED channels among the first to third LED channels according to the brightness of the mixed light corresponding to the dimming level.

**13.** The LED lighting system of claim 12, wherein the first and second LED channels emit white light and the third LED channel emits amber-based or red-based light.

**14.** The LED lighting system of claim 13, wherein the first color temperature is 10,000 K to 4,000 K, the second color temperature is 3,500 K to 2,500 K and the third color temperature is 2,500 K to 1,000 K.

**15.** The LED lighting system of one of claim 12 to claim 14, wherein the first to third LED channels emit light located within a 10-step MacAdam ellipse at a coordinate on a blackbody locus on a chromaticity diagram.

【FIG. 1】

【FIG. 2】

【FIG. 3】

【FIG. 4】

【FIG. 5】

percentage of target brightness
percentage of target color temperature

【FIG. 6】

【FIG. 7】

【FIG. 8】

【FIG. 9】

【FIG. 10】

percentage of target brightness
percentage of target color temperature

【FIG. 11】

brightness

【FIG. 12】

【FIG. 13】

⟨ Prior Art ⟩

## INTERNATIONAL SEARCH REPORT

| International application No. |
|---|
| **PCT/KR2021/012136** |

**A. CLASSIFICATION OF SUBJECT MATTER**

**H05B 45/20**(2020.01)i; **H05B 45/10**(2020.01)i; **H05B 47/16**(2020.01)i; **F21V 23/04**(2006.01)i; **F21S 10/00**(2006.01)i; **F21Y 115/10**(2016.01)i

According to International Patent Classification (IPC) or to both national classification and IPC

**B. FIELDS SEARCHED**

Minimum documentation searched (classification system followed by classification symbols)

H05B 45/20(2020.01); F21S 2/00(2006.01); F21V 23/00(2006.01); H05B 37/02(2006.01); H05B 45/10(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 엘이디 조명 시스템(LED lighting system), 엘이디 채널(LED channel), 색온도 (color temperature), 디밍(dimming), 밝기(luminance)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2012-0050781 A (HAREX CO., LTD.) 21 May 2012 (2012-05-21) See paragraphs [0065] and [0074]; claim 3; and figures 3 and 8. | 1,8-11 |
| A | | 2-7,12-15 |
| Y | KR 10-2016-0116886 A (SEOUL SEMICONDUCTOR CO., LTD.) 10 October 2016 (2016-10-10) See paragraphs [0032] and [0036]; and figure 1a. | 1,8-11 |
| Y | KR 10-2013-0024975 A (HUIZHOU LIGHT ENGINE LTD.) 08 March 2013 (2013-03-08) See paragraphs [0025] and [0038]. | 8,11 |
| A | KR 10-1337871 B1 (LEDLIGHTING CO., LTD.) 05 December 2013 (2013-12-05) See paragraphs [0016] and [0024]; and figure 1. | 1-15 |
| A | KR 10-1648788 B1 (LEDLIGHTING CO., LTD.) 18 August 2016 (2016-08-18) See paragraph [0031]; and figure 1. | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2021** | **02 December 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**EP 4 199 652 A1**

<table>
<tr><td colspan="2" align="center">INTERNATIONAL SEARCH REPORT</td><td colspan="2">International application No.<br>**PCT/KR2021/012136**</td></tr>
<tr><td colspan="4">**C.    DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>PX</td><td colspan="2">KR 10-2275953 B1 (BAE, Jin Woo) 12 July 2021 (2021-07-12)<br>See entire document.<br>*This document is a published earlier application that serves as a basis for claiming priority of the present international application.</td><td>1-15</td></tr>
</table>

Form PCT/ISA/210 (second sheet) (July 2019)

**INTERNATIONAL SEARCH REPORT**
Information on patent family members

International application No.

**PCT/KR2021/012136**

| Patent document cited in search report | | | Publication date (day/month/year) | Patent family member(s) | | | Publication date (day/month/year) |
|---|---|---|---|---|---|---|---|
| KR | 10-2012-0050781 | A | 21 May 2012 | None | | | |
| KR | 10-2016-0116886 | A | 10 October 2016 | None | | | |
| KR | 10-2013-0024975 | A | 08 March 2013 | AU | 2011-274121 | A1 | 24 January 2013 |
| | | | | CN | 102313249 | A | 11 January 2012 |
| | | | | CN | 102313249 | B | 26 November 2014 |
| | | | | EP | 2589090 | A1 | 08 May 2013 |
| | | | | HK | 1162202 | A1 | 24 August 2012 |
| | | | | JP | 2013-535084 | A | 09 September 2013 |
| | | | | SG | 186463 | A1 | 28 February 2013 |
| | | | | TW | 201219687 | A | 16 May 2012 |
| | | | | US | 2012-0001555 | A1 | 05 January 2012 |
| | | | | US | 8766555 | B2 | 01 July 2014 |
| | | | | WO | 2012-000386 | A1 | 05 January 2012 |
| KR | 10-1337871 | B1 | 05 December 2013 | None | | | |
| KR | 10-1648788 | B1 | 18 August 2016 | None | | | |
| KR | 10-2275953 | B1 | 12 July 2021 | None | | | |

Form PCT/ISA/210 (patent family annex) (July 2019)

**REFERENCES CITED IN THE DESCRIPTION**

**Patent documents cited in the description**

- US 7288902 B
- US 9769895 B
- KR 102136773
- US 8330394 B